# EUROPÄISCHE PATENTSCHRIFT

(11) **EP 1 000 655 B1**
(45) Veröffentlichungstag und Bekanntmachung des Hinweises auf die Patenterteilung: **26.11.2003**
(21) Anmeldenummer: 99118357.5
(22) Anmeldetag: 16.09.1999
(51) Int. Cl.: B01F 5/04, B29B 7/74

(54) **Injektor zur Einspeisung von Additiven in einem Polymerschmelzestrom**
Injector for feeding additives in a polymer melt stream
Injecteur pour introduire des additifs dans un courant de polymère fondu

(30) Priorität: 11.11.1998 DE 19851948
(43) Veröffentlichungstag der Anmeldung: 17.05.2000
(73) Patentinhaber: Zimmer Aktiengesellschaft, 60388 Frankfurt am Main (DE)
(72) Erfinder: Beeck, Heinz-Dieter, 60323 Frankfurt am Main (DE)

(56) Entgegenhaltungen:
- US-A- 5 176 448
- US-A- 5 388 906
- US-A- 5 452 955
- PATENT ABSTRACTS OF JAPAN vol. 008, no. 126 (C-228), 13. Juni 1984 (1984-06-13) & JP 59 039331 A (MITSUBISHI JUKOGYO KK), 3. März 1984 (1984-03-03)

## Beschreibung

Die Erfindung bezieht sich auf einen Injektor zur Einspeisung von Additiven in einen Polymerschmelzestrom.

Vorrichtungen zur Einspeisung eines flüssigen Mediums in ein anderes sind bekannt. In der US-PS 5,176,448 wird eine Vorrichtung zur Vermischung fluider Medien beschrieben, in welcher ein flüssiges Additiv über einen Kanal, der eine Umlenkung um 90° zu einem seitlichen Austritt aufweist, geleitet wird. Der seitliche Austritt mündet direkt mittig in den im Gegenstrom geführten Hauptstrom eines anderen flüssigen Mediums, unmittelbar stromaufwärts von einem Einsatz, welcher innerhalb der Hauptleitung mit dieser einen ringförmigen Spalt für den Flüssigkeitsdurchtritt bildet.

In der US-PS 4,753,535 wird eine Vorrichtung zur Vermischung zweier fluider Medien beschrieben, bei dem der größte Teil des Hauptstromes des einen flüssigen Mediums durch ein mittig in der Hauptstromleitung angeordneten und statische Mischelemente enthaltenden Strömungskanal geleitet wird. Senkrecht zur Strömungsrichtung wird das zweite flüssige Medium direkt über eine seitliche Öffnung in den Strömungskanal eingespeist.

In E. Henglein, Lexikon Chemische Technik, 1988, Seite 267, wird ein Injektor zur kontinuierlichen Vermischung zweier Gase beschrieben, bei dem vorgesehen ist, den einen Mischungspartner zentral mit hoher Geschwindigkeit in eine Mischstrecke einzugeben, während der zweite Gasstrom über den verbleibenden Ringspalt in die Strecke eintritt. Bedingt durch die hohe Strömungsgeschwindigkeit und die Geschwindigkeitsdifferenz am Eintrittsort, herrscht in der Mischstrecke eine starke Turbulenz.

In der EP-A-0838259 wird eine Einrichtung zum Zuführen von Additiven in einen Strom einer hochviskosen Flüssigkeit beschrieben, die für jedes einzuspeisende Additiv ein Zuführorgan aufweist. Die Zuführorgane weisen jeweils einen Zuführkanal für das Additiv auf, der quer zur Strömungsrichtung steht und in einer Zuführöffnung eines ringförmigen Wandteils mündet. Das ringförmige Wandteil liegt im Hauptstrom und dient als Additiv-Verteiler.

Der Erfindung liegt die Aufgabe zugrunde, einen Injektor zur weitgehend zentralen Einspeisung von Additiven in einen Polymerschmelzestrom zu schaffen, so daß die Additive mittig im Polymerschmelzestrom zusammen mit dem Polymerschmelzestrom einem statischen Mischer zur Vermischung von Additiven und Polymerschmelze zugeführt werden können. Der Injektor soll darüber hinaus auf relativ einfache Weise im Polymerschmelzestrom fixiert werden können.

Die der Erfindung zugrunde liegende Aufgabe wird durch einen Injektor zur Einspeisung von Additiven in einen Polymerschmelzestrom gelöst, der aus einem eine Längsachse aufweisenden krummflächig begrenzten Körper besteht, der im oberen Teil eine Einlaßöffnung für die Additive aufweist, die in einen in der Längsachse verlaufenden Kanal mündet, der eine Umlenkung um 90° zum seitlichen Injektoraustritt aufweist, bei dem im mittleren Bereich außen beidseitig parallel zu dem Kanal in Höhe des Injektoraustritts nutförmige Aussparungen angeordnet sind. Unter den Begriff Additive fallen beispielsweise Wärme- und UV-Stabilisatoren, Gleitmittel, Mischpolymere oder Farbkonzentrate.

Als krummflächig begrenzter Körper kann ein gerader Kreiszylinder oder ein schief abgeschnittener gerader Kreiszylinder oder ein gerader Kreiskegel oder ein gerader Kreiskegelstumpf eingesetzt werden. Der Injektor wird senkrecht zur Strömungsrichtung des Polymerschmelzestroms im Polymerschmelzestrom angeordnet, wobei der Polymerschmelzestrom beidseitig an den nutförmigen Aussparungen entlangströmt. Die Größe der nutförmigen Aussparungen ist im Hinblick auf den Durchmesser des Strömungskanals des Polymerschmelzestroms so zu wählen, daß die Kanten der nutförmigen Aussparungen, die die nutförmigen Aussparungen parallel zur Längsachse des Inkektors in Richtung dieser Längsachse begrenzen, bündig am Strömungskanal anliegen. Es hat sich in überraschender Weise gezeigt, daß am Injektoraustritt eine zentrale Einspeisung von Additiven in den Polymerschmelzestrom derart erfolgen kann, daß die Additive hinter dem Injektoraustritt mittig im Polymerschmelzestrom verbleiben und auf diese Weise mit dem Polymerschmelzestrom mittig einem statischen Mischer zugeführt werden können, was eine Voraussetzung für die Erzielung eines hohen Mischungsgrads im statischen Mischer ist. Die vorteilhafte mittige, zentrale Einspeisung der Additive ist darauf zurückzuführen, daß die nutförmigen Aussparungen beidseitig parallel zu dem Kanal in Höhe des Injektoraustritts angeordnet sind und somit symmetrische Strömungsverhältnisse vorliegen. Aufgrund der krummflächigen Begrenzung des Injektors kann dieser auf relativ einfache Weise formschlüssig im Strömungskanal des Polymerschmelzestroms angeordnet werden. Darüber hinaus ist vorteilhaft, daß der Injektoraustritt in gewünschter Weise positioniert werden kann. So ist es beispielsweise möglich, den Injektoraustritt so anzuordnen, daß die Additive in Strömungsrichtung oder entgegen der Strömungsrichtung des Polymerschmelzestroms in den Polymerschmelzestrom eingespeist werden. Bei beiden Alternativen werden die Additive mittig im Polymerschmelzestrom eingebunden und können einem statischen Mischer somit zentral zugeführt werden.

Eine bevorzugte Ausgestaltung der Erfindung besteht darin, daß der Querschnitt des Injektors in Höhe des Injektoraustritts außen tropfenförmig begrenzt ist, wobei der Injektoraustritt in den spitz zulaufenden Teil des tropfenförmig begrenzten Querschnitts mündet. Dadurch werden die Strömungsverhältnisse an den nutförmigen Aussparungen optimiert und die Strömungsrichtung des Polymerschmelzestroms zum Injektoraustritt ausgerichtet, was eine mittige Einspeisung der Additive in den Polymerschmelzestrom erleichtert.

Eine weitere bevorzugte Ausgestaltung der Erfindung besteht darin, daß die Einlaßöffnung trichterförmig ausgebildet ist. Diese Maßnahme vereinfacht die Beaufschlagung des Injektors mit den Additiven.

Gemäß einer weiteren bevorzugten Ausgestaltung der Erfindung weist der krummflächig begrenzte Körper die Form eines geraden Kreiskegelstumpfs auf. Der Injektor hat somit die Form eines Konus, wobei die breitere Stirnseite als oberer Teil in vorteilhafter Weise die Einlaßöffnung für die Additive aufweisen sollte. Durch die konische Form des Injektors wird eine besonders gute Abdichtung zwischen dem Injektor und der Vorrichtung, in der sich der Kanal des Polymerschmelzestroms befindet, erreicht.

Eine weitere Ausgestaltung der Erfindung besteht darin, daß der Neigungswinkel α zwischen den Schenkeln, die von zwei genau gegenüberliegenden Flächensegmenten auf der Außenseite des krummflächig begrenzten Körpers gebildet werden, 5 bis 15° beträgt. Als Flächensegment ist jeweils eine auf der Längsseite des krummflächig begrenzten Körpers verlaufende Gerade zu verstehen. Zwischen zwei genau gegenüberliegenden Geraden wird der Neigungswinkel α gebildet, der den Konus des Injektors beschreibt. Beträgt der Neigungswinkel α 5 bis 15°, so wird eine optimale Abdichtung des Injektors erreicht, so daß zwischen der Außenwand des Injektors und der konischen Bohrung der Vorrichtung, die den Kanal des Polymerschmelzestroms aufweist, keine Polymerschmelze eindringen kann. Dies würde eine nachteilige Verunreinigung des Polymers durch Abbauprodukte aus austretendem Polymer zur Folge haben, die auf diese Weise vermieden wird.

Nach einer weiteren bevorzugten Ausgestaltung der Erfindung weist die untere Stirnseite des Injektors mittig eine Nut auf. Diese Maßnahme erleichtert den Ein- bzw. Ausbau des Injektors sowie die Positionierung des Injektoraustritts.

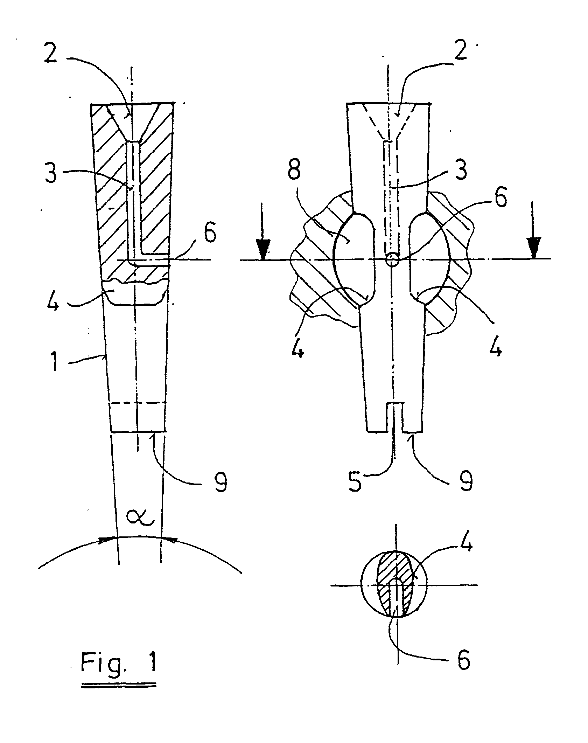

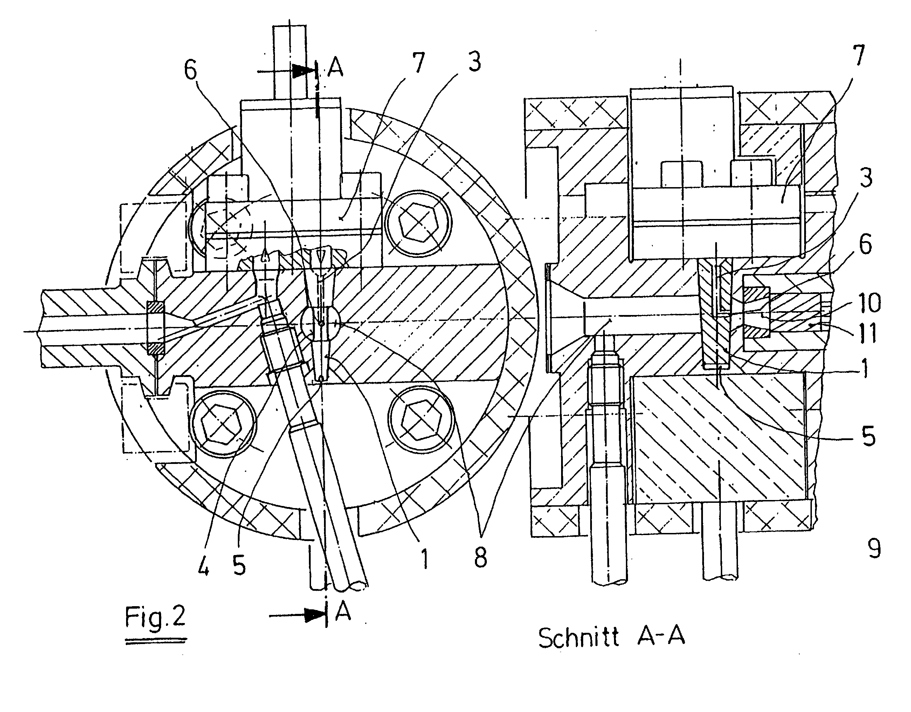

Die Erfindung wird nachfolgend anhand der Zeichnungen (Fig. 1 und Fig. 2) näher und beispielhaft erläutert, wobei
Fig. 1 den Injektor zur Einspeisung von Additiven in einen Polymerschmelzestrom teilweise im Längsschnitt mit Seitenansicht sowie Querschnitt, und
Fig. 2 den Injektor zur Einspeisung von Additiven in einen Polymerschmelzestrom im eingebauten Zustand sowie eine Seitenansicht gemäß Schnitt A-A zeigt.

In Fig. 1 ist der Injektor (1) zur Einspeisung von Additiven in einen Polymerschmelzestrom teilweise im Schnitt zusammen mit der Seitenansicht und dem zugehörigen Querschnitt dargestellt. Der Injektor (1) hat hier die Form eines geraden Kreiskegelstumpfs mit dem Neigungswinkel α zwischen den Schenkeln, die von zwei genau gegenüberliegenden Flächensegmenten auf der Außenseite des Injektors (1) gebildet werden. Der Neigungswinkel α liegt bevorzugt im Bereich zwischen 5 und 15°. An der oberen Stirnseite des Injektors (1) ist eine Einlaßöffnung (2) für die Additive angeordnet, die in einen in der Längsachse verlaufenden Kanal (3) mündet. Der in der Längsachse verlaufende Kanal (3) weist eine Umlenkung um 90° zum seitlichen Injektoraustritt (6) auf. Im mittleren Bereich des Injektors (1) sind außen beidseitig parallel zu dem Kanal (3) in Höhe des Injektoraustritts (6) nutförmige Aussparungen (4) angeordnet. Die Größe der nutförmigen Aussparungen (4) wird im Hinblick auf den Durchmesser des Strömungskanals (8) des Polymerschmelzestroms so gewählt, daß die Kanten der nutförmigen Aussparungen (4), die die nutförmigen Aussparungen (4) parallel zur Längsachse des Injektors (1) in Richtung dieser Längsachse begrenzen, bündig am Strömungskanal (8) anliegen. Im eingebauten Zustand wird der Injektor (1) an den nutförmigen Aussparungen (4) symmetrisch von dem Polymerschmelzestrom umspült. In Höhe des Injektoraustritts (6) ist der Querschnitt des Injektors (1) außen tropfenförmig begrenzt, wobei der Injektoraustritt (6) in den spitz zulaufenden Teil des tropfenförmig begrenzten Querschnitts mündet. An dem Injektoraustritt (6) kommt es daher zu einer mittigen, zentralen Einspeisung der Additive in den Polymerschmelzestrom. An der unteren Stirnseite (9) des Injektors (1) ist mittig eine Nut (5) angeordnet. Die Nut (5) dient der zusätzlichen Fixierung des Injektors (1) in der Vorrichtung, die den Strömungskanal (8) für den Polymerschmelzestrom enthält.

In Fig. 2 ist der Injektor (1) zur Einspeisung von Additiven in einen Polymerschmelzestrom im eingebauten Zustand dargestellt. Schnitt A-A zeigt den Injektor (1) im Schnitt gemäß der Seitenansicht. Aufgrund der konischen Form des Injektors (1), der als gerader Kreiskegelstumpf ausgebildet ist, ist eine formschlüssige, dichte Fixierung des Injektors (1) sichergestellt. Die obere Stirnseite des Injektors (1) grenzt mit der Einlaßöffnung (2) für die Additive direkt an die Dosierpumpe (7) für die Additive, die auf diese Weise besonders vorteilhaft relativ nahe an dem Injektoraustritt (6) des Injektors (1) positioniert werden kann. Der Polymerschmelzestrom strömt im Strömungskanal (8) direkt an den nutförmigen Aussparungen (4) des Injektors (1) vorbei und gelangt somit direkt zum Injektoraustritt (6), wo es unmittelbar zu einer mittig zentralen Einspeisung der Additive in den Polymerschmelzestrom kommt. Die eingespeisten Additive verbleiben während des weiteren Transports durch eine Beschleunigungsstrecke (10), die direkt zum nachgeschalteten statischen Mischer (11) führt, mittig im Polymerschmelzestrom. Wie im Schnitt A-A dargestellt, ist der Injektoraustritt (6) so positioniert, daß die Additive in Strömungsrichtung des Polymerschmelzestroms in diesen eingespeist werden. Es ist jedoch auch möglich, den Injektor (1) um 180° zu drehen, so daß eine Einspeisung der Additive in den Polymerschmelzestrom entgegen der Strömungsrichtung des Polymerschmelzestroms erfolgen kann. Die Positionierung des Injektoraustritts (6) in den Vorrichtungen, die den Kanal für den Polymerschmelzestrom aufweisen, kann somit relativ einfach optimiert werden.

## Patentansprüche

1. Injektor (1) zur Einspeisung von Additiven in einen Polymerschmelzestrom, der aus einem eine Längsachse aufweisenden krummflächig begrenzten Körper besteht, der im oberen Teil eine Einlaßöffnung (2) für die Additive aufweist, die in einen in der Längsachse verlaufenden Kanal (3) mündet, der eine Umlenkung um 90° zum seitlichen Injektoraustritt (6) aufweist, bei dem im mittleren Bereich außen beidseitig parallel zu dem Kanal (3) in Höhe des Injektoraustritts (6) nutförmige Aussparungen (4) angeordnet sind.

2. Injektor (1) nach Anspruch 1, dessen Querschnitt in Höhe des Injektoraustritts (6) außen tropfenförmig begrenzt ist, wobei der Injektoraustritt (6) in den spitz zulaufenden Teil des tropfenförmig begrenzten Querschnitts mündet.

3. Injektor (1) nach Anspruch 1 oder 2, bei dem die Einlaßöffnung (2) trichterförmig ausgebildet ist.

4. Injektor (1) nach einem der Ansprüche 1 bis 3, bei dem der krummflächig begrenzte Körper die Form eines geraden Kreiskegelstumpfs aufweist.

5. Injektor (1) nach Anspruch 4, bei dem der Neigungswinkel α zwischen den Schenkeln, die von zwei genau gegenüberliegenden Flächensegmenten auf der Außenseite des krummflächig begrenzten Körpers gebildet werden, 5 bis 15° beträgt.

6. Injektor (1) nach einem der Ansprüche 1 bis 5, bei dem eine untere Stirnseite (9) angeordnet ist, die mittig eine Nut (5) aufweist.

## Claims

1. An injector (1) for feeding additives in a polymer melt stream, which consists of a body bounded by a curved surface and having a longitudinal axis, which in the upper part comprises an inlet aperture (2) for the additives, which opens into a channel (3) which runs in the longitudinal axis and comprises a deviation by 90° to the lateral injector outlet (6), in which in the central region groove-shaped recesses (4) are provided on the outside on either side parallel to the channel (3) at the level of the injector outlet (6).

2. An injector (1) according to Claim 1, the cross section of which is externally bounded in a drop shape at the level of the injector outlet (5), the injector outlet (5) opening into the tapering part of the cross section bounded in a drop shape.

3. An injector (1) according to Claim 1 or 2, in which the inlet aperture (2) has a funnel-shaped construction.

4. An in j ector (1) according to one of Claims 1 to 3, in which the body bounded by a curved surface is the shape of a straight truncated circular cone.

5. An injector (1) according to Claim 4, in which the angle of inclination α between the flanks, which are formed by two precisely oppositely situated surface segments on the outside of the body which is bounded by a curved surface, is 5 to 15°.

6. An injector (1) according to one of Claims 1 to 5, in which a bottom face (9) is disposed, which centrally comprises a groove (5).

## Revendications

1. Injecteur (1) pour introduire des additifs dans un courant de polymère fondu, qui consiste en un corps limité par une surface courbe comportant un axe longitudinal, qui comporte dans la partie supérieure une ouverture d'entrée (2) pour les additifs, qui débouche dans un canal (3) qui s'étend dans l'axe longitudinal, qui comporte un coude de 90° par rapport à la sortie latérale (6) de l'injecteur, où des évidements en forme de rainures (4) sont disposés dans le domaine moyen, à l'extérieur, des deux côtés, parallèlement au canal (3), à la hauteur de la sortie (6) de l'injecteur.

2. Injecteur (1) selon la revendication 1 dont la section droite est limitée extérieurement en forme de goutte à la hauteur de la sortie (6) de l'injecteur, où la sortie (6) de l'injecteur débouche dans la partie conique de la section droite limitée en forme de goutte.

3. Injecteur (1) selon la revendication 1 ou 2, où l'ouverture d'entrée (2) est en forme d'entonnoir.

4. Injecteur (1) selon l'une des revendications 1 à 3, où le corps limité par une surface courbe présente la forme d'un tronc de cône droit.

5. Injecteur (1) selon la revendication 4, où l'angle d'inclinaison α entre les côtés qui sont formés par deux segments de surface exactement opposés sur le côté extérieur du corps limité par une surface courbe est de 5 à 15°.

6. Injecteur (1) selon l'une des revendications 1 à 5, où il est prévu un côté frontal inférieur (9) qui comporte une rainure (5) au centre.
